# EUROPEAN PATENT APPLICATION

(11) **EP 4 432 739 A1**
(43) Date of publication of application: **18.09.2024**
(21) Application number: 24163443.5
(22) Date of filing: 14.03.2024
(51) Int. Cl.: H04W 48/18, H04W 36/00

(54) **MODIFIED PACKET DATA NETWORK DEVICE HANDLING FOR RESOURCE CONSTRAINED NETWORKS**

(30) Priority: 16.03.2023 US 202318122350
(71) Applicant: T-Mobile Innovations, LLC, Overland Park, KS 66251-2100 (US)
(72) Inventor: SHAH, Mehul Jayant, Sammamish, 98075 (US); SOOD, Romil Kumar, Bothell, 98012 (US)
(74) Representative: Suddaby, Mark Edward

(57) **Abstract**

Aspects provided herein provide methods, systems, and a non-transitory computer storage media storing computer-useable instructions for packet data network device handling in a resource constrained network. A resource constrained network may be an extraterrestrial network with limited bandwidth. This limited bandwidth may cause the typical process of establishing a default data bearer before establishing an IMS bearer unfeasible, as too much bandwidth may be used by the default data bearer. Aspects discussed below provide a mechanism to establish an IMS bearer without establishing a default data bearer. The method begins with determining a public land mobile network (PLMN) associated with a base station which a UE is attempting to connect to. Then, based on a determination that the PLMN associated with the base station does not allow connection with a PDN data bearer, a PDN connectivity request is communicated with an IMS bearer and without a data bearer.

## Description

### BACKGROUND

Current smartphones and other devices which access the internet are designed to initiate bearer connectivity requests in specific ways. The connectivity to the default bearer, which is the data bearer used for internet access, is established first. A subsequent request establishes bearer connectivity for the internet protocol multimedia subsystem (IMS). The IMS bearer is used for IMS services, including voice and messaging services such as Short Messagez Service (SMS) and Rich Communication Services (RCS). Activating a data bearer is a prerequisite for establishing connectivity for the IMS bearer. If the data bearer fails to be established for any reason, such as a network issue, the user equipment (UE) will not attempt to establish an IMS bearer.

### SUMMARY

A high-level overview of various aspects of the present technology is provided in this section to introduce a selection of concepts that are further described below in the detailed description section of this disclosure. This summary is not intended to identify key or essential features of the claimed subject matter, nor is it intended to be used as an aid in isolation to determine the scope of the claimed subject matter.

According to aspects herein, methods and systems for modified packet data network device handling for resource constrained networks. A resource constrained network may be an extra-terrestrial network with limited bandwidth. This limited bandwidth may cause the typical process of establishing a default data bearer before establishing an IMS bearer unfeasible, as too much bandwidth may be used by the default data bearer. Aspects discussed below provide a mechanism to establish an IMS bearer without establishing a default data bearer.

A method for PDN device handling in a network is provided. The method begins with determining a public land mobile network (PLMN) associated with a base station which a UE is attempting to connect to. Then, based on a determination that the PLMN associated with the base station does not allow connection with a PDN data bearer, a PDN connectivity request is communicated with an IMS bearer and without a data bearer.

### BRIEF DESCRIPTION OF THE SEVERAL VIEWS OF THE DRAWINGS

Implementations of the present disclosure are described in detail below with reference to the attached drawing figures, wherein:
FIG. 1 depicts a diagram of an exemplary network environment in which implementations of the present disclosure may be employed, in accordance with aspects herein;
FIG. 2 depicts a cellular network suitable for use in implementations of the present disclosure, in accordance with aspects herein;
FIG. 3 depicts a diagram of an exemplary network architecture for an IP multimedia subsystem (IMS), in which implementations of the present disclosure may be employed, in accordance with aspects herein;
FIG. 4 depicts the initiation of bearer connectivity using a default bearer of data, in which implementations of the present disclosure may be employed, in accordance with aspects herein;
FIG. 5 is a custom logic table indexed by PLMN which indicates which PDN connections are to be established, in which implementations of the present disclosure may be employed, in accordance with aspects herein;
FIG. 6 depicts the initiation of bearer connectivity for modified packet data network device handling for resource constrained networks, in which implementations of the present disclosure may be employed, in accordance with aspects herein;
FIG. 7 is a flow diagram of an exemplary method for modified packet data network device handling for resource constrained networks, in which aspects of the present disclosure may be employed, in accordance with aspects herein; and
FIG. 8 depicts an exemplary computing device suitable for use in implementations of the present disclosure, in accordance with aspects herein.

### DETAILED DESCRIPTION

The subject matter of embodiments of the invention is described with specificity herein to meet statutory requirements. However, the description itself is not intended to limit the scope of this patent. Rather, the inventors have contemplated that the claimed subject matter might be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

Throughout this disclosure, several acronyms and shorthand notations are employed to aid the understanding of certain concepts pertaining to the associated system and services. These acronyms and shorthand notations are intended to help provide an easy methodology of communicating the ideas expressed herein and are not meant to limit the scope of embodiments described in the present disclosure. The following is a list of these acronyms:
- 3G: Third-Generation Wireless Technology
- 4G: Fourth-Generation Cellular Communication System
- 5G: Fifth-Generation Cellular Communication System
- 6G: Sixth-Generation Cellular Communication System
- AI: Artificial Intelligence
- CD-ROM: Compact Disk Read Only Memory
- CDMA: Code Division Multiple Access
- eNodeB: Evolved Node B
- GIS: Geographic/Geographical/Geospatial Information System
- gNodeB: Next Generation Node B
- GPRS: General Packet Radio Service
- GSM: Global System for Mobile communications
- iDEN: Integrated Digital Enhanced Network
- DVD: Digital Versatile Discs
- EEPROM: Electrically Erasable Programmable Read Only Memory
- LED: Light Emitting Diode
- LTE: Long Term Evolution
- MIMO: Multiple Input Multiple Output
- MD: Mobile Device
- ML: Machine Learning
- PC: Personal Computer
- PCS: Personal Communications Service
- PDA: Personal Digital Assistant
- PDSCH: Physical Downlink Shared Channel
- PHICH: Physical Hybrid ARQ Indicator Channel
- PSTN: Public Switched Telephone Network
- PUCCH: Physical Uplink Control Channel
- PUSCH: Physical Uplink Shared Channel
- RAM: Random Access Memory
- RET: Remote Electrical Tilt
- RF: Radio-Frequency
- RFI: Radio-Frequency Interference
- R/N: Relay Node
- RNR: Reverse Noise Rise
- ROM: Read Only Memory
- RSRP: Reference Transmission Receive Power
- RSRQ: Reference Transmission Receive Quality
- RSSI: Received Transmission Strength Indicator
- SINR: Transmission-to-Interference-Plus-Noise Ratio
- SNR: Transmission-to-noise ratio
- SON: Self-Organizing Networks
- TDMA: Time Division Multiple Access
- TXRU: Transceiver (or Transceiver Unit)
- UE: User Equipment
- UMTS: Universal Mobile Telecommunications Systems
- WCD: Wireless Communication Device (interchangeable with UE)

Further, various technical terms are used throughout this description. An illustrative resource that fleshes out various aspects of these terms can be found in Newton's Telecom Dictionary, 31st Edition (2018).

Embodiments of the present technology may be embodied as, among other things, a method, system, or computer-program product. Accordingly, the embodiments may take the form of a hardware embodiment, or an embodiment combining software and hardware. An embodiment takes the form of a computer-program product that includes computer-useable instructions embodied on one or more computer-readable media.

Computer-readable media include both volatile and nonvolatile media, removable and nonremovable media, and contemplate media readable by a database, a switch, and various other network devices. Network switches, routers, and related components are conventional in nature, as are means of communicating with the same. By way of example, and not limitation, computer-readable media comprise computer-storage media and communications media.

Computer-storage media, or machine-readable media, include media implemented in any method or technology for storing information. Examples of stored information include computer-useable instructions, data structures, program modules, and other data representations. Computer-storage media include, but are not limited to RAM, ROM, EEPROM, flash memory or other memory technology, CD-ROM, digital versatile discs (DVD), holographic media or other optical disc storage, magnetic cassettes, magnetic tape, magnetic disk storage, and other magnetic storage devices. These memory components can store data momentarily, temporarily, or permanently.

Communications media typically store computer-useable instructions - including data structures and program modules - in a modulated data signal. The term "modulated data signal" refers to a propagated signal that has one or more of its characteristics set or changed to encode information in the signal. Communications media include any information-delivery media. By way of example but not limitation, communications media include wired media, such as a wired network or direct-wired connection, and wireless media such as acoustic, infrared, radio, microwave, spread-spectrum, and other wireless media technologies. Combinations of the above are included within the scope of computer-readable media.

By way of background, a traditional telecommunications network employs a plurality of base stations (i.e., nodes, cell sites, cell towers) to provide network coverage. The base stations are employed to broadcast and transmit transmissions to user devices of the telecommunications network. An base station may be considered to be a portion of a base station that may comprise an antenna, a radio, and/or a controller. In aspects, a base station is defined by its ability to communicate with a user equipment (UE), such as a wireless communication device (WCD), according to a single protocol (e.g., 3G, 4G, LTE, 5G, or 6G, and the like); however, in other aspects, a single base station may communicate with a UE according to multiple protocols. As used herein, a base station may comprise one base station or more than one base station. Factors that can affect the telecommunications transmission include, e.g., location and size of the base stations, and frequency of the transmission, among other factors. The base stations are employed to broadcast and transmit transmissions to user devices of the telecommunications network. Traditionally, the base station establishes uplink (or downlink) transmission with a mobile handset over a single frequency that is exclusive to that particular uplink connection (e.g., an LTE connection with an EnodeB). In this regard, typically only one active uplink connection can occur per frequency. The base station may include one or more sectors served by individual transmitting/receiving components associated with the base station (e.g., antenna arrays controlled by an EnodeB). These transmitting/receiving components together form a multi-sector broadcast arc for communication with mobile handsets linked to the base station.

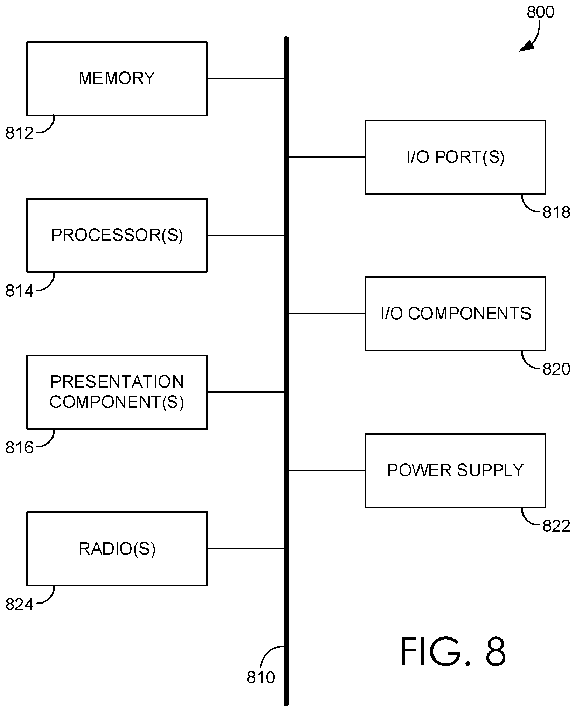

As used herein, "base station" is one or more transmitters or receivers or a combination of transmitters and receivers, including the accessory equipment, necessary at one location for providing a service involving the transmission, emission, and/or reception of radio waves for one or more specific telecommunication purposes to a mobile station (e.g., a UE), wherein the base station is not intended to be used while in motion in the provision of the service. The term/abbreviation UE (also referenced herein as a user device or wireless communications device (WCD)) can include any device employed by an end-user to communicate with a telecommunications network, such as a wireless telecommunications network. A UE can include a mobile device, a mobile broadband adapter, or any other communications device employed to communicate with the wireless telecommunications network. A UE, as one of ordinary skill in the art may appreciate, generally includes one or more antennas coupled to a radio for exchanging (e.g., transmitting and receiving) transmissions with a nearby base station. A UE may be, in an embodiment, similar to device 800 described herein with respect to FIG. 8.

As used herein, UE (also referenced herein as a user device or a wireless communication device) can include any device employed by an end-user to communicate with a wireless telecommunications network. A UE can include a mobile device, a mobile broadband adapter, a fixed location or temporarily fixed location device, or any other communications device employed to communicate with the wireless telecommunications network. For an illustrative example, a UE can include cell phones, smartphones, tablets, laptops, small cell network devices (such as micro cell, pico cell, femto cell, or similar devices), and so forth. Further, a UE can include a sensor or set of sensors coupled with any other communications device employed to communicate with the wireless telecommunications network; such as, but not limited to, a camera, a weather sensor (such as a rain gage, pressure sensor, thermometer, hygrometer, and so on), a motion detector, or any other sensor or combination of sensors. A UE, as one of ordinary skill in the art may appreciate, generally includes one or more antennas coupled to a radio for exchanging (e.g., transmitting and receiving) transmissions with a nearby base station.

In aspects, a UE provides UE data including location and channel quality information to the wireless communication network via the base station. Location information may be based on a current or last known position utilizing GPS or other satellite location services, terrestrial triangulation, an base station's physical location, or any other means of obtaining coarse or fine location information. Channel quality information may indicate a realized uplink and/or downlink transmission data rate, observed signal-to-interference-plus-noise ratio (SINR) and/or signal strength at the user device, or throughput of the connection. Channel quality information may be provided via, for example, an uplink pilot time slot, downlink pilot time slot, sounding reference signal, channel quality indicator (CQI), rank indicator, precoding matrix indicator, or some combination thereof. Channel quality information may be determined to be satisfactory or unsatisfactory, for example, based on exceeding or being less than a threshold. Location and channel quality information may take into account the user device capability, such as the number of antennas and the type of receiver used for detection. Processing of location and channel quality information may be done locally, at the base station or at the individual antenna array of the base station. In other aspects, the processing of said information may be done remotely.

The UE data may be collected at predetermined time intervals measured in milliseconds, seconds, minutes, hours, or days. Alternatively, the UE data may be collected continuously. The UE data may be stored at a storage device of the UE, and may be retrievable by the UE's primary provider as needed and/or the UE data may be stored in a cloud based storage database and may be retrievable by the UE's primary provider as needed. When the UE data is stored in the cloud based storage database, the data may be stored in association with a data identifier mapping the UE data back to the UE, or alternatively, the UE data may be collected without an identifier for anonymity.

In accordance with a first aspect of the present disclosure a method for PDN device handling in a network is provided. The method begins with determining a public land mobile network (PLMN) associated with a base station which a UE is attempting to connect to. Then, based on a determination that the PLMN associated with the base station does not allow connection with a PDN data bearer, a PDN connectivity request is communicated with an IMS bearer and without a data bearer.

A second aspect of the present disclosure provides a method for modified PDN handling in a network. The method comprises determining that a base station to which a UE is attempting to connect is resource constrained. Based on the determination that the base station is resource constrained, a PDN connectivity request is communicated with an IMS bearer and without a data bearer.

Another aspect of the present disclosure is directed to a non-transitory computer storage media storing computer-useable instructions that, when used by one or more processors, cause the processors to determine a PLMN associated with a base station to which a UE is attempting to connect. The processors then query a data disallowed PLMN table indexed by a PLMN identifier. Next, the processors determine that the PLMN is included in the data disallowed PLMN table. Once the determination is made that the PLMN is included in the data disallowed PLMN table, a PDN connectivity request is communicated with an IMS bearer and without a data bearer.

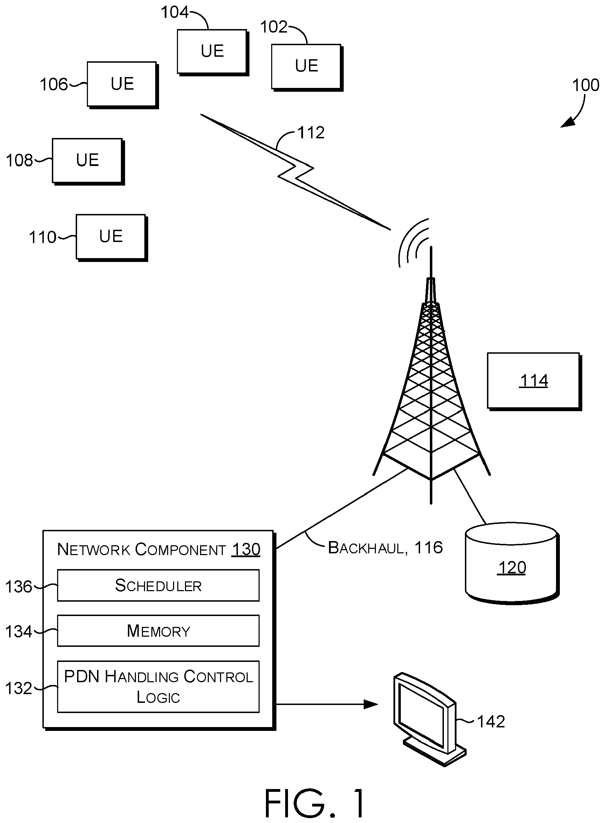

FIG. 1 illustrates an example of a network environment 100 suitable for use in implementing embodiments of the present disclosure. The network environment 100 is but one example of a suitable network environment and is not intended to suggest any limitation as to the scope of use or functionality of the disclosure. Neither should the network environment 100 be interpreted as having any dependency or requirement to any one or combination of components illustrated.

Network environment 100 includes user equipment (UE) devices 102, 104, 106, 108, and 110, base station 114 (which may be a cell site or the like), and one or more communication channels 112. The communication channels 112 can communicate over frequency bands assigned to the carrier. In network environment 100, UE devices may take on a variety of forms, such as a personal computer (PC), a user device, a smart phone, a smart watch, a laptop computer, a mobile phone, a mobile device, a tablet computer, a wearable computer, a personal digital assistant (PDA), a server, a CD player, an MP3 player, a global positioning system (GPS) device, a video player, a handheld communications device, a workstation, a router, a hotspot, and any combination of these delineated devices, or any other device (such as the computing device (800) that communicates via wireless communications with the base station 114 in order to interact with a public or private network.

In some aspects, each of the UEs 102, 104, 106, 108, and 110 may correspond to computing device 800 in FIG. 8. Thus, a UE can include, for example, a display(s), a power source(s) (e.g., a battery), a data store(s), a speaker(s), memory, a buffer(s), a radio(s) and the like. In some implementations, for example, devices such the UEs 102, 104, 106, 108, and 110 comprise a wireless or mobile device with which a wireless telecommunication network(s) can be utilized for communication (e.g., voice and/or data communication). In this regard, the user device can be any mobile computing device that communicates by way of a wireless network, for example, a 3G, 4G, 5G, LTE, CDMA, or any other type of network.

In some cases, UEs 102, 104, 106, 108, and 110 in network environment 100 can optionally utilize one or more communication channels 112 to communicate with other computing devices (e.g., a mobile device(s), a server(s), a personal computer(s), etc.) through base station 114. Base station 114 may be a gNodeB in a 5G or 6G network.

The network environment 100 may be comprised of a telecommunications network(s), or a portion thereof. A telecommunications network might include an array of devices or components (e.g., one or more base stations), some of which are not shown. Those devices or components may form network environments similar to what is shown in FIG. 1, and may also perform methods in accordance with the present disclosure. Components such as terminals, links, and nodes (as well as other components) can provide connectivity in various implementations. Network environment 100 can include multiple networks, as well as being a network of networks, but is shown in more simple form so as to not obscure other aspects of the present disclosure.

The one or more communication channels 112 can be part of a telecommunication network that connects subscribers to their immediate telecommunications service provider (i.e., home network carrier). In some instances, the one or more communication channels 112 can be associated with a telecommunications provider that provides services (e.g., 3G network, 4G network, LTE network, 5G network, and the like) to user devices, such as UEs 102, 104, 106, 108, and 110. For example, the one or more communication channels may provide voice, SMS, and/or data services to UEs 102. 104, 106, 108, and 110, or corresponding users that are registered or subscribed to utilize the services provided by the telecommunications service provider. The one or more communication channels 112 can comprise, for example, a 1x circuit voice, a 3G network (e.g., CDMA, CDMA2000, WCDMA, GSM, UMTS), a 4G network (WiMAX, LTE, HSDPA), or a 5G network or a 6G network.

In some implementations, base station 114 is configured to communicate with a UE, such as UEs 102, 104, 106, 108, and 110, that are located within the geographic area, or cell, covered by radio antennas of base station 114. Base station 114 may include one or more base stations, base transmitter stations, radios, antennas, antenna arrays, power amplifiers, transmitters/receivers, digital signal processors, control electronics, GPS equipment, and the like. In particular, base station 114 may selectively communicate with the user devices using dynamic beamforming.

As shown, base station 114 is in communication with a network component 130 and at least a network database 120 via a backhaul channel 116. As the UEs 102, 104, 106, 108, and 110 collect individual status data, the status data can be automatically communicated by each of the UEs 102, 104, 106, 108, and 110 to the base station 114. Individual status data may include times the UE is actively used on the network or times the UE is in a sleep or idle mode. Base station 114 may store the data communicated by the UEs 102, 104, 106, 108, and 110 at a network database 120. Alternatively, the base station 114 may automatically retrieve the status data from the UEs 102, 104, 106, 108, and 110, and similarly store the data in the network database 120. The data may be communicated or retrieved and stored periodically within a predetermined time interval which may be in seconds, minutes, hours, days, months, years, and the like. With the incoming of new data, the network database 120 may be refreshed with the new data every time, or within a predetermined time threshold so as to keep the status data stored in the network database 120 current. For example, the data may be received at or retrieved by the base station 114 every 10 minutes and the data stored at the network database 120 may be kept current for 30 days, which means that status data that is older than 30 days would be replaced by newer status data at 10 minute intervals. As described above, the status data collected by the UEs 102, 104, 106, 108, and 110 can include, for example, service state status, the respective UE's current geographic location, a current time, a strength of the wireless signal, available networks, and the like.

The network component 130 comprises a packet data network (PDN) control logic 132, a memory 134, and a scheduler 136. All determinations, calculations, and data further generated by the PDN control logic 132 and scheduler 136 may be stored at the memory 134 and also at the data store 140. Although the network component 130 is shown as a single component comprising the PDN control logic 132, memory 134, and the scheduler 136, it is also contemplated that each of the PDN control logic 132, memory 134, and scheduler 136 may reside at different locations, be its own separate entity, and the like, within the home network carrier system.

The network component 130 is configured to retrieve signal information, UE device information, latency information, including quality of service (QoS) information, PDN usage, and metrics from the base station 114 or one of the UEs 102, 104, 106, 108, and 110. UE device information can include a device identifier and data usage information. The scheduler 136 can monitor the activity of the UEs, 104, 106, 108, and 110 as well as any routers in the network. The scheduler 136 and PDN control logic may be configured to maintain a table indexed by the public land mobile network (PLMN) which indicates which PDN connections are to be established.

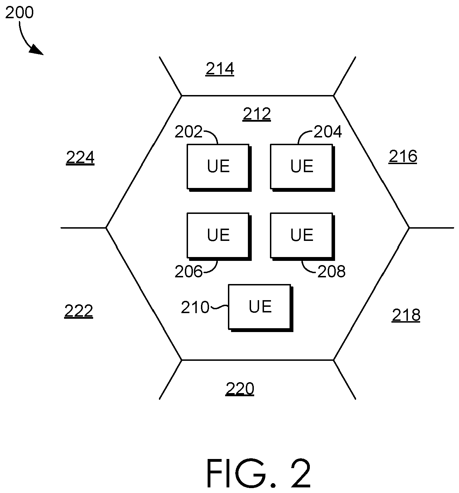

FIG. 2 depicts a cellular network suitable for use in implementations of the present disclosure, in accordance with aspects herein. For example, as shown in FIG. 2, each geographic area in the plurality of geographic areas may have a hexagonal shape such as hexagon representing a geographic area 200 having cells 212, 214, 216, 218, 220, 222, 224, each including base station or base station 114, backhaul channel 116, antenna for sending and receiving signals over communication channels 112, network database 120 and network component 130. The size of the geographic area 200 may be predetermined based on a level of granularity, detail, and/or accuracy desired for the determinations/calculations done by the systems, computerized methods, and computer-storage media. A plurality of UEs may be located within each geographic area collecting UE data and connecting to data bearers within the geographic area at a given time. For example, as shown in FIG. 2, UEs 202, 204, 206, 208, and WiFi router 210, may be located within geographic area 200 collecting UE data that is useable by network component 130, in accordance with aspects herein. UEs 202, 204, 206, and 208 can move within the cell currently occupying, such as cell 212 and can move to other cells such as adjoining cells 214, 216, 218, 220, 222 and 224.

IMS is a standards-based architectural framework for delivering multimedia communications services such as voice, video, and text messaging over IP networks. The IMS architecture enables secure and reliable multimedia communications between diverse devices across diverse networks. In addition IMS provides a unified infrastructure as well as mechanisms for controlling, manipulating, routing and managing sessions, and also implements authentication, authorization, and accounting controls.

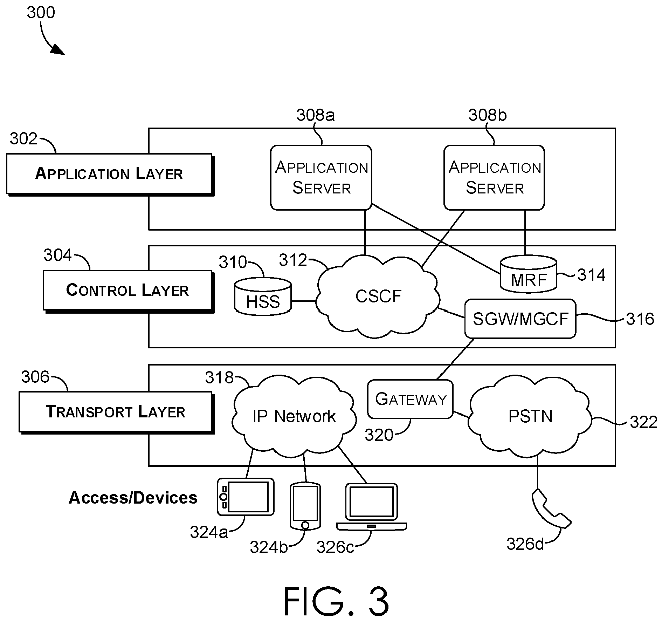

FIG. 3 depicts a diagram of an exemplary network architecture for an IP multimedia subsystem (IMS), in which implementations of the present disclosure may be employed, in accordance with aspects herein. IMS uses session initiation protocol (SIP) for session control signaling. The IMS architecture 300 includes application layer 302, control layer 304, and transport layer 306. The application layer 302 interfaces directly with control layer 304 and indirectly with the transport layer 306.

The application layer 302 includes application server 308 a and application server 308 b. The application servers 308 a and 308 b may host multimedia applications as wells as other application types. Each of application servers 308 a and b may interface with the control layer 304 through the media resource function (MRF) 314 and call session control function (CSCF) 312. The CSCF 312 has three roles: the proxy CSCF, the interrogating CSCF, and the serving CSCF. The CSCF 312 is implemented via servers that use the SIP protocol to communicate with one another and with the application servers 308 a and 308 b.

CSCF 312 is configured to receive from a UE, traffic associated with a request to initiate a call session, detect a condition associated with the traffic, and determine whether to establish the call session based a condition associated with the traffic. The conditions for the traffic may include remedying conditions to enable the traffic to establish a session, notify a server of the traffic needs, and monitor the call session. The CSCF 312 resides on control layer 304. The control layer 304 regulates communication flows within the IMS architecture 300. The CSCF 312 controls sessions between endpoints and applications.

The home subscriber service (HSS) 310 is a master database that maintains all user profile information used to authenticate and authorize subscribers. The HSS 310 is also in communication with the CSCF 312. Interoperability of the control layer 304 is provided by signaling gateway (SGW)/media gateway control function (MGCF) interacting with the public switched telephone network (PSTN), which is part of the transport layer 306. The MRF 314 provides media related functions, such as the playing of tones as well as digital announcements.

The transport layer 306 interacts with devices through a gateway 320. Gateway 320 connects to the SGW/MGCF 316 in the control layer and with the PSTN 322 in the transport layer 306. A telephone 326 d may interface with the IMS architecture through PSTN 322 and gateway 320. The transport layer 306 also includes IP network 318 which allows devices 324 a, 324 b, and 324 c to interact with the IMS architecture 300.

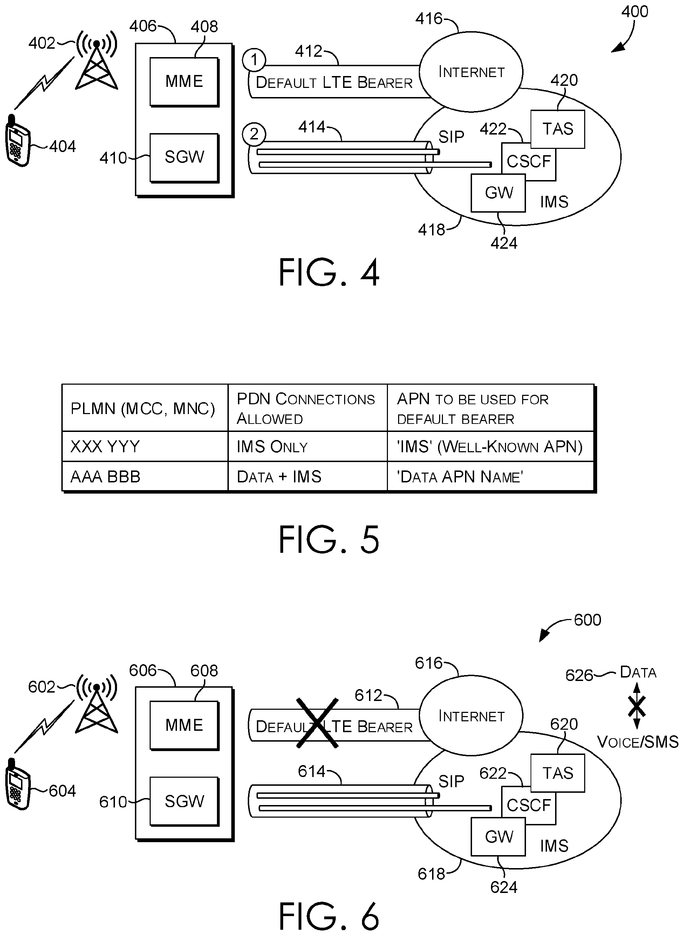

FIG. 4 depicts the initiation of bearer connectivity using a default bearer of data, in which implementations of the present disclosure may be employed, in accordance with aspects herein. The access network 400 includes a base station 402 which is in communication with a UE 404. The base station 402 includes a network component 406. Network component 406 includes mobility management entity (MME) 408. MME 408 is a key control node for the LTE access network. The MME 408 also manages access to the network and mobility and also establishes the bearer path for UEs. The MME 408 is also involved with the activation and deactivation of bearers. The network component 406 also includes a signaling gateway 410. The SGW 410 sends signaling messages between common channel signaling nodes. The SGW410 also serves as the anchor point for intra-system handover within the network.

Current smartphone devices may initiate bearer connectivity requests in specific ways. The connectivity to the default bearer, which is the data bearer used for internet access is established fist and then a subsequent request may be sent to establish bearer connectivity for the IMS bearer. Activating a data bearer is a prerequisite to establishing an IMS bearer for IMS connectivity. The PDN connectivity procedure may be used by a UE 404 to establish a default LTE bearer 412 to the internet 416. The UE 404 sends a PDN connectivity request to the access network 400 via base station 402. If the access network 400 accepts the request the default LTE bearer activation procedure may be performed. The network component 406 establishes the default LTE bearer 412 first. Only after the default LTE bearer 412 is established is the IMS bearer 414 established using a session initiation protocol (SIP).

The IMS 418 provides access to multiple servers and functions. The telephony application server (TAS) 420 is part of the IMS architecture and may be deployed along with components for call control and media transformation. The TAS 420 emulates the calling functions provided by the public switched telephone network, which may include call forwarding, voicemail and conference bridges. In addition, the TAS 420 may provide additional multimedia features and flexibility not available on the public switched telephone network, such as unified messaging, video calling, and the integration of softphone clients on multiple devices. Call control may be provided by the call session control function (CSCF) 422 and media access and transformation may be provided by gateway (GW) 424. The CSCF 422 provides the central control function is the IMS 418 to set up, establish, modify, and tear down multimedia sessions. The GW 424 provides access to the multimedia content that will be served to the UE 404.

The bearer connectivity described in FIG. 4 may pose challenges over resource constrained networks, including extra-terrestrial access networks. Extra-terrestrial access networks may block resource intensive data applications from using the data bearer. These extra-terrestrial access networks may allow only IMS services using the IMS bearer. Devices reliant on the extra-terrestrial network may need to establish the IMS bearer first with no dependency on the default data bearer. Aspects discussed herein provide the modifying data bearer establishment to ensure that for devices accessing an extra-terrestrial network trigger a procedure for establishing the IMS bearer first. The IMS bearer establishment procedure would be triggered when a UE is registered on specific networks, such as extra-terrestrial networks.

FIG. 5 is a custom logic table indexed by PLMN which indicates which PDN connections are to be established, in which implementations of the present disclosure may be employed, in accordance with aspects herein. A UE, such as UE 404, may be configured with custom logic to maintain a table indexed by the PLMN. The PLMN may use a mobile country code (MCC) and a mobile network code (MNC). The MCC uniquely identifies that home country of a mobile network operator. The MNC is used in conjunction with the MCC to uniquely identify a mobile network operator that is operating a network, such as access network 400 in FIG. 4. The access network 400 may be a GSM, UMTS, LTE, 5G, or 6G network. The custom logic table indicates which PDN connections are to be established.

The table of FIG. 5 indicates the PDN connections that need to be established for the specific PLMN indicated by the MCC, MNC combination. For example, the PLMN denoted by XXX YYY allows an IMS only PDN connection. The access point name (APN) to be used for the default bearer is "ims," which may be a specific IMS that the UE user wishes to access. Another PLMN indicated by AAA BBB allows both data and IMS connections and is denoted by "data APN name," which may be a specific data service the UE user wants to access.

Once the UE 404 is registered on a particular network, the UE 404 uses the custom logic table of FIG. 5 and initiates the PDN connectivity requests toward the desired network. For example, the first table entry, XXX YYY indicates that the default PDN connection for the data bearer should not be established and that only the default bearer for the IMS PDN connection using the "ims" APN. The custom logic in the table ensures that the UE sends the APN name in the PDN creation request, eliminating the possibility of the MME 408 using the default APN that may be received in the subscription data from the HSS 310.

FIG. 6 depicts the initiation of bearer connectivity for modified packet data network device handling for resource constrained networks, in which implementations of the present disclosure may be employed, in accordance with aspects herein. The access network 600 includes a base station 602 which is in communication with a UE 604. The base station 602 includes a network component 606. Network component 606 includes MME 608. The MME 608 also manages access to the network and mobility and also establishes the bearer path for UEs. The MME 608 is also involved with the activation and deactivation of bearers. The network component 606 also includes a SGW 610. The SGW 610 sends signaling messages between common channel signaling nodes. The SGW 610 also serves as the anchor point for intra-system handover within the network.

The IMS 618 provides access to multiple servers and functions. The TAS 620 is part of the IMS architecture and may be deployed along with components for call control and media transformation. The TAS 620 emulates the calling functions provided by the public switched telephone network, which may include call forwarding, voicemail and conference bridges. In addition, the TAS 620 may provide additional multimedia features and flexibility not available on the public switched telephone network, such as unified messaging, video calling, and the integration of softphone clients on multiple devices. Call control may be provided by the CSCF 622 and media access and transformation may be provided by GW 624. The CSCF 422 provides the central control function is the IMS 418 to set up, establish, modify, and tear down multimedia sessions. The GW 624 provides access to the multimedia content that will be served to the UE 604.

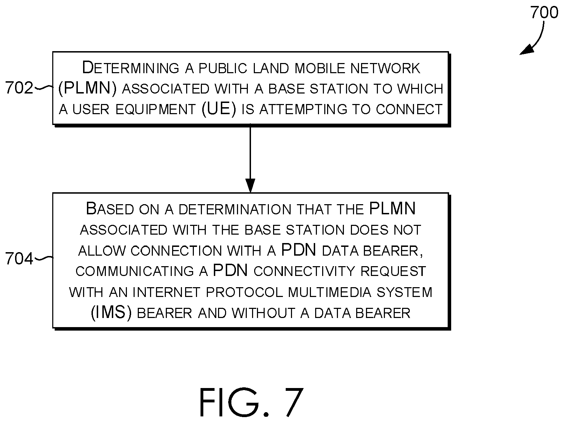

FIG. 7 is a flow diagram of an exemplary method for modified packet data network device handling for resource constrained networks, in which aspects of the present disclosure may be employed, in accordance with aspects herein. The method 700 begins in step 702 with determining a PLMN associated with a base station to which a UE is attempting to connect. Based on a determination that the PLMN associated with the base station does not allow connection with a PDN data bearer, the method continues in step 704 with communicating a PDN connectivity request with an IMS bearer and without a data bearer.

The base station that the UE is attempting to connect with may be resource constrained. Networks may be resource constrained for multiple reasons, including network congestion, but may also be constrained due to association with an extraterrestrial RAN. Extraterrestrial RANs face particular challenges in managing a limited set of resources and for this reason, it may not be feasible to connect using a data bearer as a first connection. The PDN connectivity request may use an access point name that may indicate that the UE is attempting to connect to an extraterrestrial RAN. The IMS access point name may be associated with a PDN connection. In turn, the PDN connection may be accessed through a table stored on the UE that is indexed by a PLMN identifier. The PLMN identifier may use a mobile country code (MCC) and a mobile network code (MNC), which may also identify a type of PDN connection allowed. The type of PDN connection allowed may be an IMS only PDN connection. Some base stations may not be in a resource constrained network, or the network may not be operating in a resource constrained environment when the UE transmits the connectivity request. In this situation, the type of PDN connection allowed may be both a data PDN connection and an IMS PDN connection.

FIG. 8 depicts an exemplary computing device suitable for use in implementations of the present disclosure, in accordance with aspects herein. With continued reference to FIG. 8, computing device 800 includes bus 810 that directly or indirectly couples the following devices: memory 812, one or more processors 814, one or more presentation components 816, input/output (I/O) ports 818, I/O components 820, radio(s) 824, and power supply 822. Bus 810 represents what may be one or more busses (such as an address bus, data bus, or combination thereof). Although the devices of FIG. 8 are shown with lines for the sake of clarity, in reality, delineating various components is not so clear, and metaphorically, the lines would more accurately be grey and fuzzy. For example, one may consider a presentation component such as a display device to be one of I/O components 820. Also, processors, such as one or more processors 814, have memory. The present disclosure hereof recognizes that such is the nature of the art, and reiterates that FIG. 8 is merely illustrative of an exemplary computing environment that can be used in connection with one or more implementations of the present disclosure. Distinction is not made between such categories as "workstation," "server," "laptop," "handheld device," etc., as all are contemplated within the scope of FIG. 8 and refer to "computer" or "computing device."

The implementations of the present disclosure may be described in the general context of computer code or machine-useable instructions, including computer-executable instructions such as program components, being executed by a computer or other machine, such as a personal data assistant or other handheld device. Generally, program components, including routines, programs, objects, components, data structures, and the like, refer to code that performs particular tasks or implements particular abstract data types. Implementations of the present disclosure may be practiced in a variety of system configurations, including handheld devices, consumer electronics, general-purpose computers, specialty computing devices, etc. Implementations of the present disclosure may also be practiced in distributed computing environments where tasks are performed by remote-processing devices that are linked through a communications network.

Computing device 800 typically includes a variety of computer-readable media. Computer-readable media can be any available media that can be accessed by computing device 800 and includes both volatile and nonvolatile media, removable and non-removable media. By way of example, and not limitation, computer-readable media may comprise computer storage media and communication media. Computer storage media includes both volatile and nonvolatile, removable and non-removable media implemented in any method or technology for storage of information such as computer-readable instructions, data structures, program modules or other data. Computer storage media includes RAM, ROM, EEPROM, flash memory or other memory technology, CD-ROM, digital versatile disks (DVD) or other optical disk storage, magnetic cassettes, magnetic tape, magnetic disk storage or other magnetic storage devices. Computer storage media does not comprise a propagated data signal.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 812 includes computer-storage media in the form of volatile and/or nonvolatile memory. Memory 812 may be removable, nonremovable, or a combination thereof. Exemplary memory includes solid-state memory, hard drives, optical-disc drives, etc. Computing device 800 includes one or more processors 814 that read data from various entities such as bus 810, memory 812 or I/O components 820. One or more presentation components 816 present data indications to a person or other device. Exemplary one or more presentation components 816 include a display device, speaker, printing component, vibrating component, etc. I/O ports 818 allow computing device 800 to be logically coupled to other devices including I/O components 820, some of which may be built into computing device 800. Illustrative I/O components 820 include a microphone, joystick, game pad, satellite dish, scanner, printer, wireless device, etc.

The radio(s) 824 represents one or more radios that facilitate communication with a wireless telecommunications network. While a single radio 824 is shown in FIG. 8, it is contemplated that there may be more than one radio 824 coupled to the bus 810. It is expressly conceived that a computing device with more than one radio 824 could facilitate communication with the wireless telecommunications network using both radios. Illustrative wireless telecommunications technologies include CDMA, GPRS, TDMA, GSM, and the like. The radio 824 may additionally or alternatively facilitate other types of wireless communications including Wi-Fi, WiMAX, LTE, 3G, 4G, LTE, 5G, NR, VoLTE, or other VoIP communications. As can be appreciated, in various embodiments, radio 824 can be configured to support multiple technologies and/or multiple radios can be utilized to support multiple technologies. A wireless telecommunications network might include an array of devices, which are not shown so as to not obscure more relevant aspects of the invention. Components such as a base station, a communications tower, or even base stations (as well as other components) can provide wireless connectivity in some embodiments.

Many different arrangements of the various components depicted, as well as components not shown, are possible without departing from the scope of the claims below. Embodiments of our technology have been described with the intent to be illustrative rather than restrictive. Alternative embodiments will become apparent to readers of this disclosure after and because of reading it. Alternative means of implementing the aforementioned can be completed without departing from the scope of the claims below. Certain features and subcombinations are of utility and may be employed without reference to other features and subcombinations and are contemplated within the scope of the claims.

Embodiments of the present disclosure also reside in the following numbered clauses:
Clause 1. A method for packet data network (PDN) device handling in a network, the method comprising:
   determining a public land mobile network (PLMN) associated with a base station to which a user equipment (UE) is attempting to connect; and
   based on a determination that the PLMN associated with the base station does not allow connection with a PDN data bearer, communicating a PDN connectivity request with an internet protocol multimedia system (IMS) bearer and without a data bearer.
Clause 2. The method of clause 1, wherein the base station is resource constrained due to association with an extraterrestrial radio access network (RAN).
Clause 3. The method of clause 1, wherein the PDN connectivity request uses an IMS access point name.
Clause 4. The method of clause 1, wherein the IMS access point name is associated with a PDN connection.
Clause 5. The method of clause 4, wherein the PDN connection is based on a table indexed by a PLMN identifier.
Clause 6. The method of clause 5, wherein the PLMN identifier uses a mobile country code (MCC) and a mobile network code (MNC).
Clause 7. The method of clause 6, wherein the MCC and the MNC identify a type of PDN connection allowed.
Clause 8. The method of clause 7, wherein the type of PDN connection allowed for the MCC and the MNC is an IMS only PDN connection.
Clause 9. The method of clause 7, wherein the type of PDN connection allowed for the MCC and the MNS allows both a data PDN connection and an IMS PDN connection.
Clause 10. The method of clause 2, wherein the base station is resource constrained and is not associated with an extraterrestrial RAN.
Clause 11. A method for packet data network (PDN) device handling in a network, the method comprising:
   determining that a base station to which a user equipment (UE) is attempting to connect is resource constrained; and
   based on a determination that the base station is resource constrained, communicating a PDN connectivity request with an internet protocol multimedia system (IMS) bearer and without a data bearer.
Clause 12. The method of clause 11, wherein the base station is associated with a public land mobile network (PLMN).
Clause 13. The method of clause 11, wherein the base station is resource constrained due to association with an extraterrestrial radio access network (RAN).
Clause 14. The method of clause 11, wherein the IMS bearer accesses a table indexed by a PLMN identifier that includes an IMS access point name associated with a PDN connection.
Clause 15. The method of clause 14, wherein the PLMN identifier further comprises a mobile country code (MCC) and a mobile network code (MNC).
Clause 16. The method of clause 15, wherein the MCC and the MNC identify a type of PDN connection allowed.
Clause 17. The method of clause 16, wherein the type of PDN connection allowed for the MCC and the MNS allows both a data PDN connection and an IMS PDN connection.
Clause 18. The method of clause 11, wherein the base station is resource constrained and is not associated with an extraterrestrial RAN.
Clause 19. A non-transitory computer storage media storing computer-useable instructions that, when used by one or more processors, cause the processors to:
   determine a public land mobile network (PLMN) associated with a base station to which a user equipment (UE) is attempting to connect;
   query a data disallowed PLMN table indexed by a PLMN identifier;
   determine that the PLMN is included in the data disallowed PLMN table; and
   communicate a packet data network (PDN) connectivity request with an internet protocol multimedia system (IMS) bearer and without a data bearer.
Clause 20. The non-transitory computer storage media of clause 18, wherein the base station is resource constrained due to association with an extraterrestrial radio access network.

## Claims

1. A method for packet data network (PDN) device handling in a network, the method comprising:
determining a public land mobile network (PLMN) associated with a base station to which a user equipment (UE) is attempting to connect; and
based on a determination that the PLMN associated with the base station does not allow connection with a PDN data bearer, communicating a PDN connectivity request with an internet protocol multimedia system (IMS) bearer and without a data bearer.

2. The method of claim 1, wherein the base station is resource constrained due to association with an extraterrestrial radio access network (RAN).

3. The method of claim 1, wherein the PDN connectivity request uses an IMS access point name.

4. The method of claim 1, wherein the IMS access point name is associated with a PDN connection, wherein the PDN connection is based on a table indexed by a PLMN identifier.

5. The method of claim 4, wherein the PLMN identifier uses a mobile country code (MCC) and a mobile network code (MNC), wherein the MCC and the MNC identify a type of PDN connection allowed.

6. The method of claim 5, wherein the type of PDN connection allowed for the MCC and the MNC:
is an IMS only PDN connection; or
allows both a data PDN connection and an IMS PDN connection.

7. The method of claim 2, wherein the base station is resource constrained and is not associated with an extraterrestrial RAN.

8. A method for packet data network (PDN) device handling in a network, the method comprising:
determining that a base station to which a user equipment (UE) is attempting to connect is resource constrained; and
based on a determination that the base station is resource constrained, communicating a PDN connectivity request with an internet protocol multimedia system (IMS) bearer and without a data bearer.

9. The method of claim 8, wherein the base station is associated with a public land mobile network (PLMN).

10. The method of claim 8, wherein the base station is resource constrained due to association with an extraterrestrial radio access network (RAN).

11. The method of claim 8, wherein the IMS bearer accesses a table indexed by a PLMN identifier that includes an IMS access point name associated with a PDN connection.

12. The method of claim 11, wherein the PLMN identifier further comprises a mobile country code (MCC) and a mobile network code (MNC), wherein the MCC and the MNC identify a type of PDN connection allowed.

13. The method of claim 12, wherein the type of PDN connection allowed for the MCC and the MNC allows both a data PDN connection and an IMS PDN connection.

14. The method of claim 8, wherein the base station is resource constrained and is not associated with an extraterrestrial RAN.

15. A non-transitory computer storage media storing computer-useable instructions that, when used by one or more processors, cause the processors to:
determine a public land mobile network (PLMN) associated with a base station to which a user equipment (UE) is attempting to connect;
query a data disallowed PLMN table indexed by a PLMN identifier;
determine that the PLMN is included in the data disallowed PLMN table; and
communicate a packet data network (PDN) connectivity request with an internet protocol multimedia system (IMS) bearer and without a data bearer.
